# EUROPEAN PATENT SPECIFICATION

(11) **EP 0 747 202 B1**
(45) Date of publication and mention of the grant of the patent: **19.12.2001**
(21) Application number: 96304333.6
(22) Date of filing: 10.06.1996
(51) Int. Cl.: B29C 65/02, B29C 59/08, B29C 59/10

(54) **Treatment of profile strips for reclosable fasteners**
Behandlung von Profilstreifen für wiederverschliessbare Verschlüsse
Traitement de bandes profilées pour fermetures refermables

(30) Priority: 08.06.1995 GB 9511605
(43) Date of publication of application: 11.12.1996
(73) Proprietor: Supreme Plastics Holdings Limited, Finchley London N3 2TL (GB)
(72) Inventor: Offa-Jones, Martin John Charles, Whitby N. Yorks YO22 5HE (GB); Brighton, Geoffrey, Whitby N.Yorks YO21 1ET (GB)
(74) Representative: W.P. THOMPSON & CO.

(56) References cited:
- EP-A- 0 395 362
- EP-A- 0 588 456
- EP-A- 0 621 197
- DE-A- 2 821 435
- FR-A- 1 525 718
- FR-A- 2 525 182
- GB-A- 2 253 244
- US-A- 2 968 576

## Description

This invention relates to the treatment of profile strips for reclosable fasteners, such as are used as closures for bags and containers, and is particularly concerned with the treatment of such profile strips to enhance and/or facilitate subsequent procedures and process steps.

Reclosable fasteners used for the sealing of bags, containers and the like comprise male and female profile strips which are pressed together to close the bag or container and which can be pulled apart to open the bag or container. In many cases these male and female profile strips are extruded and subsequently welded on to a substrate or substrates which constitute the material of the bag or container. The male and female profile strips are extruded with a flange portion or portions adjacent to the actual male or female part of the extrudate. When these profile strips with their profile flanges are welded to a substrate or substrates problems can arise due to the profile strips fusing to each other when they are sealed to the substrate bag walls by the application of heat and/or pressure.

Various attempts have been made to try to avoid this fusing of the profile strips to each other. In one arrangement a metal plate or the like is inserted between the profile strips. Alternatively, heat insulating blocks may be provided on the faces of the profile strips, or some other form of thickening of the profile flanges may be provided, such as the formation of ridges, as a thermal barrier to prevent the heat and/or pressure causing the profile flanges to weld together.

EP-A-0621197 describes a reclosable plastic zipper provided with a tamper-evident, non-reclosable peel seal formed by applying an adhesive to a treated strip adjacent to the interlocking zipper. The treatment is preferably by corona discharge, effected on one face only of the two opposing surfaces, in order to achieve preferential adhesion of the adhesive to that one treated surface.

It is an object of the present invention to provide an improved reclosable fastener and method of making a reclosable fastener to enhance and/or facilitate subsequent procedures and process steps. The present invention is based upon the treatment of both the profile strips by corona discharge or flame to inhibit fusing or welding of the profile strips together.

The application of a corona discharge treatment or flame treatment to a plastics material has a subtle effect. The properties of adhesion of the plastics material, i.e. its ability to bond to foreign substances or materials, is significantly improved, while at the same time its ability to weld to or fuse with itself or similar materials is adversely affected.

In many areas of the plastics manufacturing industry this side effect, namely the decrease in the ability of the plastics material to weld to itself or similar materials, is regarded as a considerable disadvantage. However, the present invention makes positive use of what was thought to be a disadvantage and by so doing enables a different problem to be solved.

In accordance with the invention there is provided a reclosable fastener for a bag or like container, in accordance with claim 1.

Also in accordance with the invention there is provided a method of making a reclosable fastener for a bag or like container, in accordance with claim 6.

In order that the invention may be more fully understood, one presently preferred embodiment of method and apparatus in accordance with the invention will now be described by way of example and with reference to the accompanying drawings, in which:
Fig. 1 is a block schematic diagram of a apparatus for the manufacture of profile strip material; and,
Fig. 2 is a block schematic diagram of the treatment unit of the apparatus shown in Fig. 1.

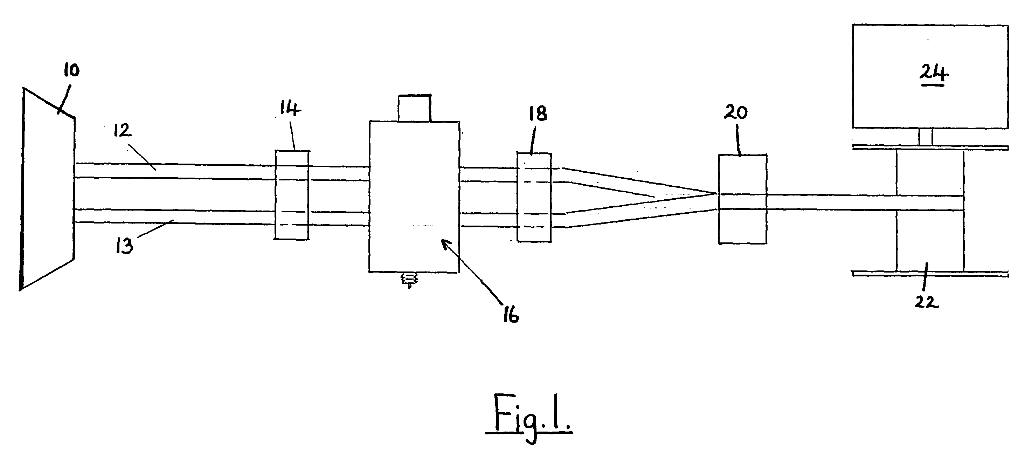

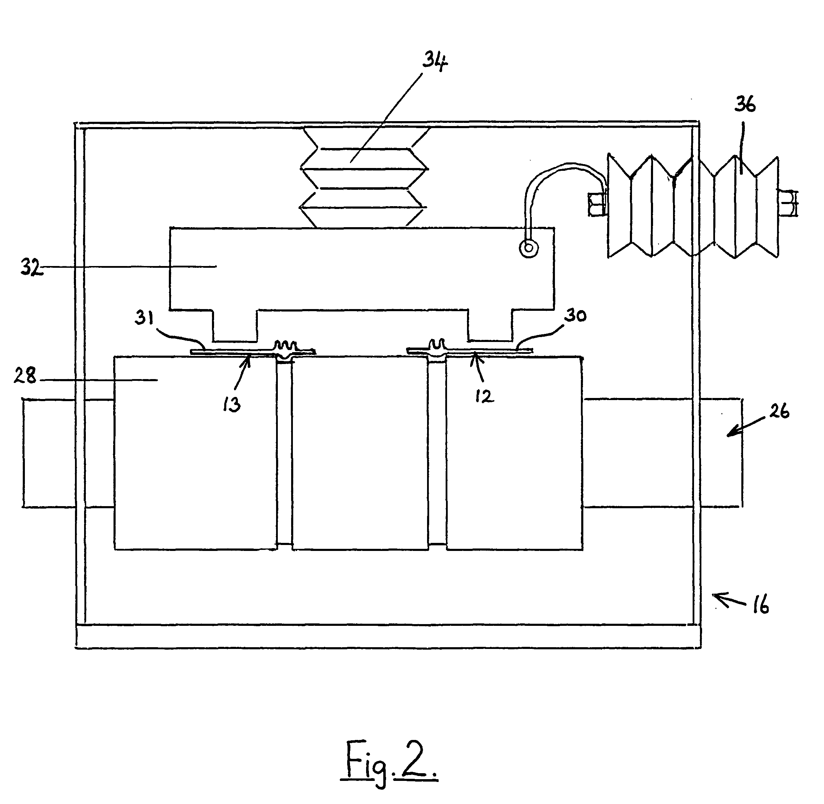

Referring first to Fig. 1, there is shown at 10 an extruder from which a male profile strip 12 and a female profile strip 13 are extruded. The strips 12 and 13 pass through a profile guide 14 to a treatment unit indicated generally at 16. This treatment unit 16 will be described in more detail hereinafter with reference to Fig.2. Following the treatment unit 16 the profile strips 12, 13 pass through a further profile guide 18 and then to a profile closing unit 20 which brings the profiles of the strips into alignment and presses them into conjoined relationship. Thereafter the conjoined strip is gathered on a drum 22 of a winder 24. In subsequent procedures and processes the conjoined strip is welded to a suitable substrate material for the making of a bag, container or the like.

The treatment unit 16 is shown in more detail in Fig. 2. The unit includes a treatment roller 26 which comprises a grooved drum 28. The male and female profile strips 12, 13 pass over the surface of the drum 28 with the male and female portions of the profiles in alignment with the grooves and with flange portions 30 and 31 of the profile strips in overlying contact with the drum surface. With the illustrated profile strips 12 and 13 it is the flange portions 30 and 31 to which the bag substrate material will subsequently be welded.

Above the treatment roller 26 is positioned a treatment bar 32 which is suspended from a support insulator 34. The treatment bar 32 incorporates the corona discharge apparatus. The bar 32 has two protruding portions which direct the discharge towards the flanges 30 and 31 of the profile strips. The treatment bar 32 is connected by an HT lead to an HT input connection and insulator 36.

In practice, the treatment unit acts as a large electrical capacitor with two charged electrodes; one positive, one negative, connected to earth. The untreated profile strips 12 and 13 are passed between the electrodes. When an electrical current is fed into the system from a power generator the disparity in polarisation results in a high voltage discharge (around 10,000 volts) across the electrodes, thereby rearranging the surface structure of the plastics material.

Depending upon the structure of the treatment bar 32, the treatment can be restricted to a very specific, narrowly defined area of the profiles. Then, when in a subsequent process or process step the profile flanges 30 and 31 are brought into contact with each other accompanied by heat and/or pressure, the fact that they have been surface treated by the corona discharge will make them more resistant to welding together.

The principle of the present invention is applicable to a wide range of plastics materials, including polypropylene, mono and co-extruded polyethylenes of various densities, and other similar plastics materials.

Although reference has been made above to the use of a corona discharge treatment, a flame treatment of the profile strips can alternatively be used in order to modify the surface structure of the material in such a way as to create the desirable properties referred to above.

By making the profile strip material less able to weld to itself, by means of the present invention, one can also use the method and apparatus of the present invention to achieve other desirable end results, including in particular a bag, container or package which has a tamper-evident seal. By suitably adjusting the parameters of the corona discharge or flame treatment of the profile flanges a light tack-seal can be created, which can however easily be broken. In an extension of the invention it is therefore possible to print on to the treated flanges 30, 31 and then to seal through the printed area, using this light tack-seal. Although a product which had not been tampered with would look normal, i.e. the printing would look normal, if any attempt was made to part the profile the tack-seal would be broken and this would damage the printing in a tell-tale manner which would be evidence of tampering. It is to be noted that the corona discharge or flame treatment enhances the ability of the plastics profile strip material to accept ink and for the ink to adhere satisfactorily to the plastics material. The plastics material is therefore receptive to the ink.

## Claims

1. A reclosable fastener for a bag or like container, comprising a first plastics profile strip (12) having a male profile thereon and a flange portion (30), a second plastics profile strip (13) having a female profile thereon and a flange portion (31), the male and female profiles (12, 13) being conjoined and the respective flange portions being in an opposed relationship, **characterised in that** at least a part of the surface of each of said flange portions (30, 31) which faces the other flange portion is treated in a mutually opposed zone to make the said surfaces more resistant to welding to each other.

2. A reclosable fastener as claimed in claim 1, **characterised in that** said treatment is a corona discharge.

3. A reclosable fastener as claimed in claim 1, **characterised in that** said treatment is a flame treatment.

4. A reclosable fastener as claimed in claim 1, 2 or 3, **characterised in that** the treated flange portions carry printing.

5. A reclosable fastener as claimed in claim 4, **characterised in that** the treatment is such as to permit a tack-seal between the flange portions at the treated zone, with the flange portions carrying printing at the tack-seal zone.

6. A method of making a reclosable fastener for a bag or like container, which comprises the steps of extruding a first strip (12) having a male profile and a flange portion (30), extruding a second strip (13) having a female profile and a flange portion (31), and passing the strips through a profile closing device (20) which presses the profiles into conjoined relationship, **characterised by** treating at least a part of the opposing surfaces of each of said flange portions (30, 31) to make said opposing surfaces more resistant to welding to each other.

7. A method as claimed in claim 6, **characterised in that** the treatment is by corona discharge.

8. A method as claimed in claim 6, **characterised in that** the treatment is by flame.

9. A method as claimed in claim 6, 7 or 8, **characterised by** printing with ink on to at least one of the treated surfaces.

10. A method as claimed in claim 6, 7, 8 or 9, **characterised by** winding the strips with conjoined profiles on to a storage drum.

## Patentansprüche

1. Wiederverschließbare Befestigungseinrichtung für eine Tasche oder einen ähnlichen Behälter, die einen ersten Kunststoffprofilstreifen (12) mit einem Außenprofil darauf und einem Flanschteil (30), einen zweiten Kunststoffprofilstreifen (13) mit einem Innenprofil darauf und einem Flanschteil (31) umfasst, wobei die Außen- und Innenprofile (12, 13) miteinander verbunden werden und die jeweiligen Flanschteile in einem gegenüberliegenden Verhältnis sind, **dadurch gekennzeichnet, dass** wenigstens ein Teil der Oberfläche jedes der genannten Flanschteile (30, 31), das zu dem anderen Flanschteil gerichtet ist, in einer gegenseitig gegenüberliegenden Zone behandelt wird, um die genannten Oberflächen widerstandsfähiger gegen Aneinanderschweißen zu machen.

2. Wiederverschließbare Befestigungseinrichtung nach Anspruch 1, **dadurch gekennzeichnet, dass** die genannte Behandlung eine Koronaentladung darstellt.

3. Wiederverschließbare Befestigungseinrichtung nach Anspruch 1, **dadurch gekennzeichnet, dass** die genannte Behandlung eine Flammbehandlung darstellt.

4. Wiederverschließbare Befestigungseinrichtung nach Anspruch 1, 2 oder 3, **dadurch gekennzeichnet, dass** die behandelten Flanschteile einen Aufdruck tragen.

5. Wiederverschließbare Befestigungseinrichtung nach Anspruch 4, **dadurch gekennzeichnet, dass** die Behandlung derart ist, um eine Heftdichtung zwischen den Flanschteilen an der behandelten Zone zu ermöglichen, wobei die Flanschteile einen Aufdruck an der Heftdichtungszone tragen.

6. Verfahren zum Herstellen einer wiederverschließbaren Befestigungseinrichtung für eine Tasche oder einen ähnlichen Behälter, das die Schritte umfasst, einen ersten Streifen (12) mit einem Außenprofil und einem Flanschteil (30) zu extrudieren, einen zweiten Streifen (13) mit einem Innenprofil und einem Flanschteil (31) zu extrudieren, und die Streifen durch eine Profilverschlusseinrichtung (20) zu führen, die die Profile in ein miteinander verbundenes Verhältnis presst, **gekennzeichnet durch** Behandlung wenigstens eines Teils der gegenüberliegenden Oberfläche jedes der genannten Flanschteile (30, 31), um die genannten gegenüberliegenden Oberflächen widerstandsfähiger gegen Aneinanderschweißen zu machen.

7. Verfahren nach Anspruch 6, **dadurch gekennzeichnet, dass** die Behandlung durch Koronaentladung erfolgt.

8. Verfahren nach Anspruch 6, **dadurch gekennzeichnet, dass** die Behandlung durch Flammen erfolgt.

9. Verfahren nach Anspruch 6, 7 oder 8, **gekennzeichnet durch** Bedrucken wenigstens einer der behandelten Oberflächen mit Tinte.

10. Verfahren nach Anspruch 6, 7, 8 oder 9, **gekennzeichnet durch** Wickeln der Streifen mit miteinander verbundenen Profilen auf eine Lagertrommel.

## Revendications

1. Fermeture refermable pour un sac ou récipient semblable, comprenant une première bande profilée en plastique (12) ayant un profil mâle sur celle-ci et une partie de bride (30), une deuxième bande profilée en plastique (13) ayant un profil femelle sur celle-ci et une partie de bride (31), les profils mâle et femelle (12, 13) étant joints ensemble et les parties de bride respectives étant en relation opposée, **caractérisée en ce qu'**au moins une partie de la surface de chacune desdites parties de bride (30, 31) qui fait face à l'autre partie de bride est traitée dans une zone mutuellement opposée afin de rendre lesdites surfaces plus résistantes à un soudage mutuel.

2. Fermeture refermable telle que revendiquée dans la revendication 1, **caractérisée en ce que** ledit traitement est une décharge par effet corona.

3. Fermeture refermable telle que revendiquée dans la revendication 1, **caractérisée en ce que** ledit traitement est un traitement à la flamme.

4. Fermeture refermable telle que revendiquée dans la revendication 1, 2 ou 3, **caractérisée en ce que** les parties de bride traitées portent une impression.

5. Fermeture refermable telle que revendiquée dans la revendication 4, **caractérisée en ce que** le traitement est tel qu'il permet un joint par points entre les parties de bride au niveau de la zone traitée, et les parties de bride portant une impression au niveau de la zone de joint par points.

6. Méthode pour fabriquer une fermeture refermable pour un sac ou récipient semblable, qui comprend les étapes consistant à extruder une première bande (12) ayant un profil mâle et une partie de bride (30), à extruder une deuxième bande (13) ayant un profil femelle et une partie de bride (31), et à passer les bandes à travers un dispositif de fermeture de profils (20) qui presse les profils en une relation jointe ensemble, **caractérisée par** le traitement d'au moins une partie des surfaces opposées de chacune desdites parties de bride (30, 31) afin de rendre les surfaces opposées plus résistantes à un soudage mutuel.

7. Méthode telle que revendiquée dans la revendication 6, **caractérisée en ce que** le traitement est par décharge par effet corona.

8. Méthode telle que revendiquée dans la revendication 6, **caractérisée en ce que** le traitement est par flamme.

9. Méthode telle que revendiquée dans la revendication 6, 7 ou 8, **caractérisée en** imprimant avec de l'encre sur au moins l'une des surfaces traitées.

10. Méthode telle que revendiquée dans la revendication 6, 7, 8 ou 9, **caractérisée en** enroulant les bandes avec les profils joints ensemble sur un tambour de stockage.
